# EUROPÄISCHE PATENTSCHRIFT

(11) **EP 1 282 290 B1**
(45) Veröffentlichungstag und Bekanntmachung des Hinweises auf die Patenterteilung: **08.12.2004**
(21) Anmeldenummer: 02012229.7
(22) Anmeldetag: 04.06.2002
(51) Int. Cl.: H04L 29/12

(54) **Elektronisches System und Verfahren zum Adressieren von Geräten**
Electronic system and method for addressing of devices
Système et procédé electronique pour adresser des appareils

(30) Priorität: 03.08.2001 DE 10138121
(43) Veröffentlichungstag der Anmeldung: 05.02.2003
(73) Patentinhaber: ROBERT BOSCH GMBH, 70442 Stuttgart (DE)
(72) Erfinder: Vasco, Vollmer, 31188 Holle (DE); HOFMANN, Matthias, 01705 Freital (DE)

(56) Entgegenhaltungen:
- WO-A-01/43460
- CHARLES J. MURRAY: "Automakers demo vehicles crammed with consumer gear" EETIMES, [Online] 19. Oktober 2000 (2000-10-19), Seiten 1-2, XP002219517 Gefunden im Internet: <URL:http://www.eetimes.com/story/OEG20001 019S0038> [gefunden am 2002-11-05]
- HAVI ORGANIZATION: "HAVi, the A/V digital network revolution" HAVI ORGANIZATION, [Online] 1999, XP002219518 Gefunden im Internet: <URL:www.havi.org> [gefunden am 2002-11-05]

## Beschreibung

Die Erfindung betrifft ein elektronisches System und ein Verfahren zum Adressieren von Geräten unterschiedlicher Bussysteme.

Aus dem Stand der Technik sind verschiedene Verfahren zur Adressierung von Geräten über Bussystem-Grenzen hinweg bekannt. Zum Beispiel ist aus US-A-6 128 664 ein Verbindungsgerät zwischen Bussystemen mit einer Adressübersetzung bekannt. Dieses Gerät erlaubt es, dynamisch eine IP-Adresse einer privaten Adresse zuzuordnen, wenn eine Verbindung zu einem LAN von außen her aufgebaut wird.

Aus dem Artikel von CHARLES J. MURRAY: 'Automakers demo vehicles crammed with consumer gear' in der EETIMES, vom 19. Oktober 2000, gefunden im Internet: <URL:http://www.eetimes.com ist ein Gateway zwischen dem auf statischen, weltweit eindeutigen Adressen basierenden Bussystem IDB-1394 sowie dem auf dynamischen Adressen basierenden Bussystem MOST bekannt. Der Artikel enthält keine explizite Informationen über die Transformation von Adressen des einen Bussystems in Adressen des anderen Bussystems.

Daneben sind auch Verfahren bekannt, die auf einem sogenannten Network Address Translator (NAT) oder auf einem PROXY basieren. Zur Übersetzung von einer Adresse des einen in die Adresse eines anderen Bussystems wird hierzu ein sogenannter Look-Up in einer Tabelle durchgeführt, um eine entsprechende Adresse zu ermitteln.

Ein solcher Ansatz kann für IP basierte Netzwerke angemessen sein, jedoch ist er für Bussysteme und verteilte Softwarearchitekturen ungeeignet.

Aus dem Stand der Technik sind verschiedene verteilte Softwarearchitekturen bekannt. Aus "The HAVi specification, Specification of the home audio / video interoperability (HAVi) architecture", HAVi specification 1.0, HAVi organisation, 18. Januar 2000, ist eine solche verteilte Softwarearchitektur zur Implementierung in sogenannten Consumer Electronics (CE) Geräten und Computern, wie z. B. sogenannten Personal Digital Assistants und anderen elektronischen Geräten, die einen Computer aufweisen, bekannt. Die HAVi Architektur beinhaltet Dienste, die die Interoperabilität und die Entwicklung von verteilten Anwendung in Hausnetzwerken vereinfachen. Eine bevorzugte Anwendung der HAVi Architektur betrifft Geräte der Unterhaltungselektronikindustrie, die den IEEE 1394 und / oder IEC 61883 Interfacestandards entsprechen.

In der verteilten Softwarearchitektur nach dem HAVi Industriestandard erfolgt die Steuerung der einzelnen Geräte über Steuerungsmodule, sogenannte Device Control Moduls (DCM). Bei einem DCM handelt es sich um ein HAVi Softwareelement, welches eine Schnittstelle zur Steuerung der Funktionen eines bestimmten Gerätes zur Verfügung stellt. Ein DCM ist also jeweils spezifisch für ein bestimmtes Gerät oder eine bestimmte Geräteklasse.

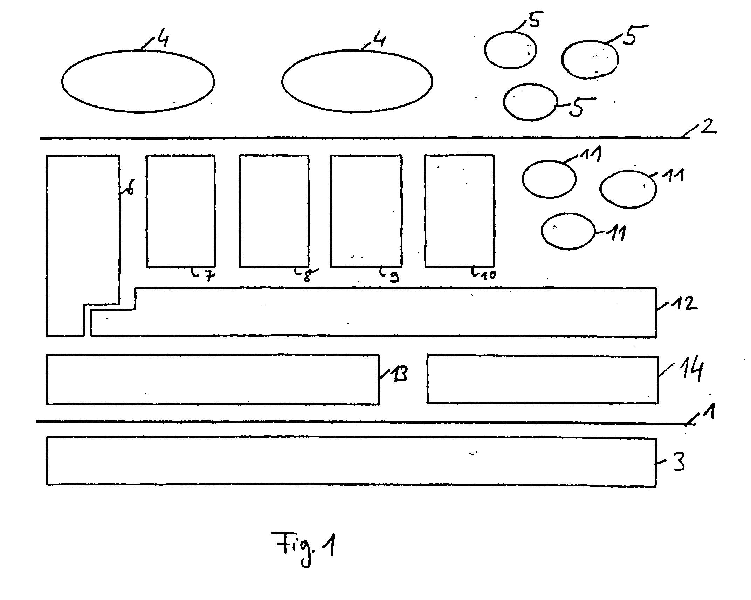

Die Fig. 1 zeigt ein Beispiel für HAVi Softwareelemente, die eine Mittelschicht zwischen plattformspezifischen Application Programming Interfaces (API) und plattformunabhängigen Anwendungen bilden. Das Beispiel der Fig. 1 ist aus "HAVi, The A/V Digital Network Revolution", HAVi Organisation, 1999 (http://www.HAVi.org) bekannt.

Die verteilte Softwarearchitektur ist zwischen einer plattformspezifischen API 1 und einer Interoperbilitäts-API 2 realisiert. Unterhalb der plattformspezifischen API 1 befindet sich eine herstellerabhängige Plattform 3; oberhalb der Interoperabilitäts-API 2 befinden sich Anwendungen 4 sowie sogenannte Havlets 5. Bei einem Havlet handelt es sich um eine HAVi Java Anwendung, die auf Anfrage eines Steuerungsgeräts von einem DCM oder Anwendungsmodul geladen wird.

Die eigentlichen HAVi-Komponenten können als einzelne Module im System als Softwareelemente adressiert werden. Die Softwareelemente können dabei im Allgemeinen sowohl zentral als auch verteilt angeordnet sein, das heißt, eine Implementierung mit nur einer Instanz eines bestimmten Softwareelements bis hin zu einer Implementierung, die in jedem Gerät eine solche Instanz vorsieht, ist möglich. Im einzelnen beinhaltet das System die folgenden Softwareelemente:

Streammanager 6: Der Streammanager dient dem Auf- und Abbau und der Verwaltung von Verbindungen zwischen Softwareelementen oder Geräten. Der Streammanager kann wie eine Registry als verteiltes System aufgebaut sein. Dabei können spezielle Befehle dazu dienen, den Zustand aller Streammanager oder eines bestimmtes Streammanagers abzufragen.

Eventmanager 7: Der Eventmanager transportiert Mitteilung über Zustandsänderungen im System zu den Kommunikationsteilnehmern.

Registry 8: Die Registry beinhaltet Informationen über jedes im Netzwerk verfügbares Softwareelement und jedes verfügbare Gerät. Informationen über die einzelnen Softwareelemente werden dabei in Attributen abgelegt. Zusätzlich zu den vordefinierten Attributen ist es möglich, weitere hinzuzufügen. Die Architektur der Registry erlaubt eine Verteilung im System, das heißt, jedes Gerät kann einen Teil der gesamten Registry beinhalten; sie kann aber auch zentral gehalten werden. Für den Zugriff auf die Registry ist dies unsichtbar, da die verschiedenen Instanzen der Registry innerhalb des Netzwerkes gegebenenfalls die angeforderten Information selbsttätig austauschen.

Resource Manager 9: Der Resource Manager führt die Belegung und Freigabe von Ressourcen - das heißt Geräten und Softwareelementen - durch und speichert geplante Vorgänge wie z. B. Videorecorderaufnahmen.

DCM Manager 10 : Der DCM Manager ist verantwortlich für das Installieren und Deinstallieren von DCMs bei entsprechend geeigneten Geräten. Dabei wird ein standardisiertes Verfahren zur Installation von DCMs im Java-Byte-Code-Format angeboten. Eine Installation von nativem Code (binär) ist nicht in dem HAVi Standard beschrieben, kann jedoch als proprietäre Lösung hinzugefügt werden.

Device Control Module (DCM) 11: Ein DCM ist ein Softwareelement, das ein oder mehrere sogenannte Functional Control Moduls (FCM) zu einem Gerätetreiber zusammenführt.

Functional Control Modul (FCM): Ein FCM ist ein Softwareelement mit dem eine funktionale Einheit eines Gerätes (z. B. ein CD-Laufwerk oder ein UKW-Tuner) angesteuert wird. Ein DCM wird dabei aus den allen DCMs gemeinsamen Grundfunktionen und gerätespezifischen FCMs gebildet.

Diese verteilten oder in einem bestimmten Gerät implementierten Module bilden eine einheitliche Interoperabilitäts API 2. Durch diese einheitlich Schnittstelle wird eine Interoperabilität zwischen den Applikationen 4 und Geräten verschiedener Hersteller erreicht.

Die HAVi Softwarearchitektur beinhaltet ferner ein Messaging System 12, welches zum Austausch von Mitteilungen zwischen den verschiedenen HAVi Softwareelementen dient. Der Communication Media Manager 13 erlaubt anderen Geräten oder Softwareelementen asynchrone oder isochrone Kommunikation über das Netzwerk zu betreiben. Der Communication Media Manager 13 ist dabei spezifisch an das Bussystem angepasst. Vorzugsweise bedient er den IEEE 1394 Standard.
Als Schnittstelle zu der Plattform-spezifischen API 1 weist die HAVi Softwarearchitektur ferner ein sogenanntes Transport Adaption Module (TAM) auf, welches ebenfalls spezifisch für die herstellerabhängige Plattform 3 ist.

Die im HAVi-Standard beschriebene Adressierung von Geräten basiert im wesentlichen auf dem gleichen Verfahren, mit dem auch der IEEE-1394 Standard arbeitet. Dabei wird jedem Gerät eine weltweit eindeutige Adresse zugewiesen - ein sogenannter Global Unique Identifier (GUID). Die eindeutige Adresse besteht aus einem 24 Bit-langen Teil, der den Gerätehersteller eindeutig identifiziert, dem sogenannten Organisational Unique Identifier (OUI). Die OUI wird von der IEEE-Organisation einem Gerätehersteller zugewiesen. Dieser Teil der Adresse wird auch als Herstellerkennung bezeichnet.

Daneben gibt es einen zweiten 40 Bit-langen Adressteil, der von dem Hersteller weitgehend frei vergeben werden kann und der ein Gerät im Zusammenhang mit der Herstellerkennung eindeutig identifiziert. Eine häufig verwendete Lösung ist die Verwendung der Seriennummer für die 40 Bit-lange herstellerabhängige Kennung. Möglich ist aber auch die weitere Aufteilung der herstellerabhängigen Kennung in mehrere Teilkennungen, beispielsweise zur Codierung der Modellfamilie, des Herstellungszeitpunkts oder dergleichen.

Die GUID besteht also insgesamt aus einer 24 Bit-langen Herstellerkennung sowie einer 40 Bit-langen herstellerabhängigen Kennung. Zusätzlich zu der GUID ist in dem HAVi-Standard noch ein Softwareelement-Identifier von 80 Bit Länge definiert. Dieser besteht aus der GUID und einem zusätzlichen Software Handle mit 16 Bit Länge, mit dem ein bestimmtes Softwareelement innerhalb eines Gerätes adressiert werden kann.

Nachteilig ist bei einer Adressierung basierend auf einer statischen Adresse , d.h. beispielweise mittels einer GUID, dass keine Kompatibilität mit Bussystemen mit dynamischer Adresszuweisung besteht.

Der Erfindung liegt daher die Aufgabe zu Grunde, ein verbessertes elektronisches System und Verfahren für die Adressierung von Geräten zu schaffen.

Die der Erfindung zu Grunde liegende Aufgabe wird jeweils mit den Merkmalen der unabhängigen Patentansprüche gelöst.

Bevorzugte Ausführungsformen der Erfindung sind in den abhängigen Ansprüchen angegeben.

Die Erfindung erlaubt es, eine Kommunikation zwischen Geräten unterschiedlicher Bussysteme herzustellen, wobei eine Übersetzung von dynamisch vergebenen Adressen in quasi-statische Adressen erfolgt, die von einem Bussystem, das auf weltweit eindeutigen Adressen basiert, wie z. B. GUID Adressen, verarbeitet werden können.

Nach einer bevorzugten Ausführungsform der Erfindung werden Geräte nach dem MOST-Standard in ein elektronisches System nach dem HAVi-Standard eingebunden. Die Erfindung erlaubt dabei die Adresskonvertierung zwischen den bei HAVi verwendeten Adressen und den beim MOST definierten Adressen.

Bei MOST (Media Oriented Systems Transport) handelt es sich um einen Standard für Multimedia Networking im Kraftfahrzeug. Die Erfindung ist besonders vorteilhaft, indem sie erlaubt, solche Kraftfahrzeug-Multimediaanwendungen mit Anwendungen nach dem HAVi-Standard zu integrieren, so dass auch der HAVi-Standard im Automobil vorteilhaft eingesetzt werden kann.

Die Erfindung ist dabei keineswegs auf die Integration von Bussystemen nach dem HAVi-Standard bzw. dem IEEE-1394 Standard und dem MOST-Standard beschränkt, sondern ist generell für die Bildung einer Schnittstelle zwischen Bussystemen mit statischer und dynamischer Adressierung einsetzbar. Die Erfindung erlaubt dabei sogar auch die Kommunikation zwischen zwei Bussystemen, die jeweils auf einer statischen Adressierung beruhen.

Im Weiteren wird ein bevorzugtes Ausführungsbeispiel der Erfindung mit Bezug auf die Zeichnungen näher erläutert. Es zeigen:
- Fig. 1: die aus dem Stand der Technik bekannte HAVi Softwarearchitektur,
- Fig. 2: ein Blockdiagramm einer Ausführungsform der Erfindung,
- Fig. 3: ein Flussdiagramm einer Ausführungsform des erfindungsgemäßen Verfahrens,
- Fig. 4: ein Blockdiagramm einer weiteren Ausführungsform der Erfindung.

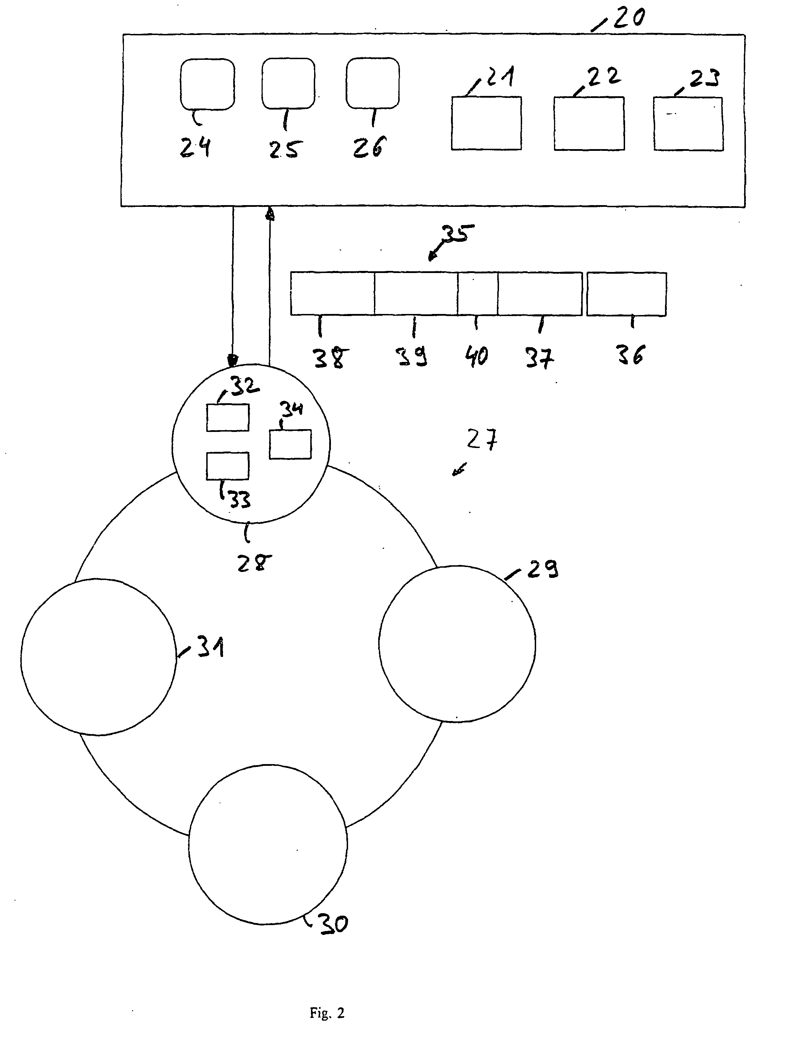

Die Fig. 2 zeigt ein elektronisches System beispielsweise in einem Kraftfahrzeug mit einem Bussystem 20, welches auf statischen Adressen basiert. Beispielsweise kann es sich dabei um eine Bussystem nach dem IEEE-1394 Standard handeln.

Zu dem Bussystem 20 gehören die Geräte 21, 22 und 23 sowie weitere in der Fig. 2 nicht dargestellte Geräte.

Jedes der Geräte 21, 22 und 23 und der weiteren Geräte hat eine statische Adresse, die weltweit einzigartig ist und als Global Unique Identifier (GUID) bezeichnet wird.

Das Bussystem 20 beinhaltet ferner die DCMs 24, 25 und 26, die der entsprechenden Definition des HAVi-Standards entsprechen können.

Ferner beinhaltet das elektronische System ein Bussystem 27 mit den Geräten 28, 29, 30 und 31 sowie weiterer der Übersichtlichkeit halber in der Fig. 2 nicht dargestellter Geräte.

Die Geräte 28 bis 31 und die weiteren Geräte des Bussystems 27 sind in einer Ringtopologie miteinander verbunden. Hierbei kann es sich beispielsweise um ein Netzwerk nach dem MOST-Standard handeln.

Bei den Geräten 21, 22 und 23 sowie den Geräten 28, 29, 30 und 31 sowie den weiteren Geräten des elektronischen Systems handelt es sich beispielsweise um Geräte der Unterhaltungselektronik, z. B. ein Autoradio, CD-Player, DVD-Player oder andere sogenannte Infotainment und / oder Multimediageräte, Kommunikationsgeräte, insbesondere Internetzugänge, und / oder ein Navigationsgerät. Diese Geräte können untereinander über die Bussystemgrenzen hinweg kommunizieren und bieten so eine aufeinander abgestimmte Funktionalität an.

In der bevorzugten Ausführungsform der Fig. 2 handelt es sich bei dem Gerät 28 um eine Zentraleinheit oder eine sogenannten Head-Unit des Bussystems 27. Diese Zentraleinheit 28 hat einen Speicher 32 und einen Speicher 33 sowie ein Programm 34. In dem Speicher 32 ist eine dem Bussystem 27 zugeordnete statische Adresse abgelegt. Bei dieser statischen Adresse kann es sich beispielsweise um eine 24 Bit-lange Herstellerkennung handeln. Diese Herstellerkennung kennzeichnet den Hersteller der Zentraleinheit 28.

Der Speicher 33 der Zentraleinheit 28 dient zur Speicherung eines Busdiskriminators, das heißt, einer Kennung für die Art des verwendeten Bussystems 27. Beispielsweise kann der Speicher 33 eine Kennung für ein MOST-Bussystem beinhalten, wenn es sich bei dem Bussystem 27 um ein System nach dem MOST-Standard handelt. Andere Kennungen können für entsprechende Kommunikationssysteme nach den IEEE-1394, MOST, Bluetooth, Ethernet / IEEE802.3, HIPERLAN Typ 1 und Typ 2, IEEE802.11, IEEE802.16, GSM, UMTS, USB, DECT, IEEE802.5, ISDN, CAN, LIN, HIBA, PowerLine, D2Boptical, TETRA Standards definiert sein.

Die Zentraleinheit 28 hat ferner ein Programm 34 zum Zugriff auf die Speicher 32 und 33, um eine Adresse des Bussystems 27 in eine quasi-statische Adresse 35 eines Kommandos 36 zu übersetzen.

Die Zentraleinheit 28 steht mit dem Bussystem 20 in Wirkverbindung, beispielsweise über eine Verbindungsleitung, einen Verbindungsstecker, eine drahtlose Verbindungsstrecke oder eine optische Leitung.

Bei einer Anwendung im Kraftfahrzeug wird das elektronische System der Fig. 2 beispielsweise beim Starten des Motors ebenfalls eingeschaltet. Dabei werden die Bussysteme 20 und 27 initialisiert. In dem Bussystem 20 sind dabei die Adressen der Teilnehmer des Bussystems 20, insbesondere die Adressen der Geräte 21, 22 und 23 sowie auch der DCMs 24, 25 und 26 fest vorgegeben und unveränderlich. Für diese statischen Adressen der Teilnehmer des Bussystems 20 kann das sogenannte GUID-Format angewendet werden.

Bei der Initialisierung des Bussystems 27 werden die Adressen der Teilnehmer des Bussystems 27 dagegen dynamisch vergeben. Im Falle eines MOST-- Bussystems erfolgt die dynamische Vergabe dieser Adressen, in dem die Zentraleinheit 28 die einzelnen Busteilnehmer, das heißt, beispielsweise die Geräte 29, 30 und 31 sowie auch die Zentraleinheit 28 selbst entsprechend derer Position in der Ringtopologie des Bussystems 27 durchnummeriert.

Diese dynamisch vergebenen Adressen bleiben dabei im Allgemeinen unverändert, solange auch das Bussystem 27 unverändert bleibt. Ändert sich jedoch die Konfiguration des Bussystems 27 beispielsweise dadurch, dass eines der Geräte 29, 30 oder 31 wegen eines Defekts aus dem Bussystem 27 entfernt wird oder dadurch, dass ein weiteres Gerät hinzugefügt wird, so ändern sich entsprechend die bei der Initialisierung des Bussystems 27 dynamisch vergebenen Adressen.

Im Weiteren wird davon ausgegangen, dass eines der Geräte des Bussystems 27, beispielsweise das Gerät 29, eine Nachricht an einen der Teilnehmer des Bussystems 20, beispielsweise die DCM 24 senden möchte. Das Gerät 29 sendet dazu eine Nachricht entsprechend der Formatdefinition des MOST-Standards mit einem Kommando.

Diese Nachricht wird von der Zentraleinheit 28 empfangen. Die Adresse der Nachricht wird von der Zentraleinheit 28, wie folgt übersetzt: Die dynamisch vergebene Adresse wird einem Feld 37 der quasi-statischen Adresse 35 zugeordnet. Aus dem Speicher 32 liest die Zentraleinheit 38 die dort gespeicherte Herstellerkennung der Zentraleinheit 28 und ordnet diese einem Feld 38 der quasi-statischen Adresse 35 zu. Ferner liest die Zentraleinheit 28 den Busdiskriminator aus dem Speicher 33, das heißt, die Kennung des in dem Bussystem 27 verwendeten Standards - in dem betrachteten Beispielsfall des MOST-Standards. Dieser Busdiskriminator wird einem Feld 39 der quasi-statischen Adresse 35 zugeordnet.

Vorzugsweise hat das Feld 38 eine Länge von 24 Bit zur Aufnahme der Herstellerkennung aus dem Speicher 32; das Feld 39 hat vorzugsweise eine Länge von 8 Bit zur Aufnahme des Busdiskriminators aus dem Speicher 33; das Feld 37 hat vorzugsweise eine Länge von 16 Bit zur Aufnahme der dynamisch vergebenen Adresse, entsprechend des MOST-Standards.

Nach dem MOST-Standard werden bei der Initialisierung für jedes der Geräte 28 bis 31 drei unterschiedliche Adressen dynamisch vergeben: Die "position in the ring"-Adresse, die "logical node identifier"-Adresse sowie die "logical node identifier"-Adresse mit einem Off-set von HEX 400. Dementsprechend hat ein Gerät also zwei "logical node identifier"-Adressen.

Die Adressierung eines Geräts geschieht im MOST-Standard bis auf wenige Ausnahmen zur Systemverwaltung über die 16 Bit "logical-node-identifier"-Adresse. Entsprechend ist es vorteilhaft, die "logical node identifier"-Adresse dem Feld 37 zuzuordnen. In diesem Fall verbleibt bei einer Gesamtadresslänge der quasi-statischen Adresse 35 von 64 Bit ein Feld 40 mit einer Länge von 16 Bit mit "don't care" Bit-Positionen. Dieses Feld 40 kann beispielsweise mit Nullen oder Einsen von der Zentraleinheit 28 aufgefüllt werden.

An die quasi-statische Adresse 35 wird das Kommando 36 der Nachricht des Geräts 29 angehängt. Die aus der so gebildeten quasi-statischen Adresse 35 und dem Kommando 36 gebildete übersetzte Nachricht wird von dem Bussystems 27, das heißt von der Zentraleinheit 28, an das Bussystem 20 übertragen und dort beispielsweise von der DCM 24 empfangen und interpretiert.

Die DCM 24 antwortet dann mit einer Nachricht, die dieselbe quasi-statische Adresse 35 zur Adressierung des Geräts 29 beinhaltet, in dem eine entsprechende Nachricht von der DCM 24 an das Bussystem 27, das heißt, die Zentraleinheit 28, gesendet wird. Die Zentraleinheit 28 leitet die entsprechende Nutzinformation der Nachricht der DCM 24, das heißt, beispielsweise ein Kommando 36, mittels der "logical node identifier"-Adresse des Felds 37 an das Gerät 29 weiter.

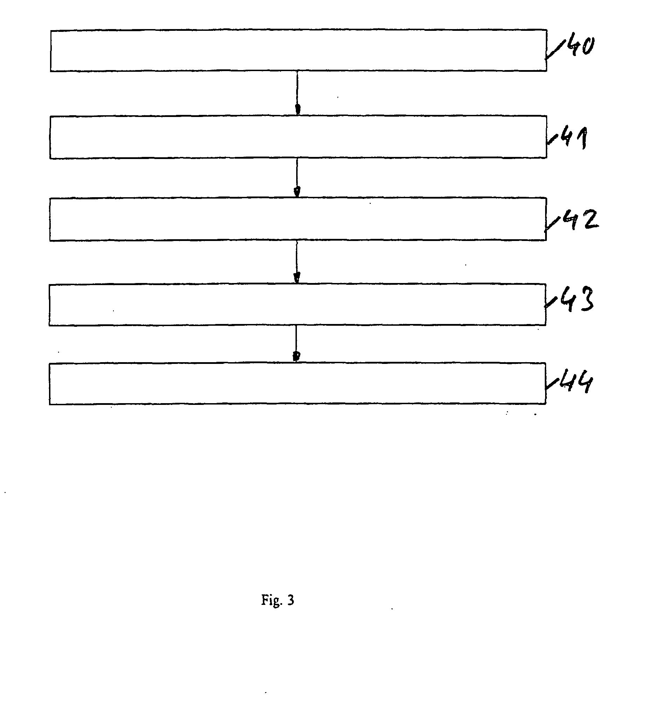

Die Fig. 3 zeigt ein entsprechendes Flussdiagramm. In dem Schritt 40 erfolgt zunächst eine dynamische Vergabe von "logical node identifier" -Adressen in einem MOST-Bussystem. In dem Schritt 41 wird eine Nachricht mit einem Kommando von einem der Busteilnehmer des MOST-Bussystems gesendet, die an einen Teilnehmer eines anderen Bussystems mit statischen Adressen gerichtet ist.

In dem Schritt 42 wird die Adresse des MOST-Formats übersetzt, indem eine quasi-statische Adresse gebildet wird. Dies erfolgt durch Verkettung der "logical node identifier" -Adresse mit einer Herstellerkennung der Zentraleinheit des MOST-Bussystems und eines Busdiskriminators. Dadurch wird ein Adress-Format generiert, welches dem Format einer GUID entspricht.

Das Kommando wird dann mit der so übersetzten Adresse an das Bussystem mit statisch zugeordneten Adressen weitergeleitet und dort von einem der Systemteilnehmer empfangen. Der betreffende Systemteilnehmer kann dann eine Antwort an den entsprechenden Teilnehmer des MOST-Bussystems zurückschicken, indem dieselbe zuvor übersetzte quasi-statische Adresse verwendet wird. Mittels der in dieser quasi-statischen Adresse beinhalteten "logical node identifier" -Adresse wird die entsprechende Nutzinformation in der Antwort des Systemteilnehmers des Bussystems mit statischen Adressen von der Zentraleinheit des MOST-Bussystems an den entsprechenden Teilnehmer des MOST-Bussystems weitergeleitet.

In einer weiteren Ausführungsform ist lediglich eine Zentraleinheit des MOST-Bussystems ohne weitere Geräte 29, 30, 31 (vgl. Fig. 2) vorhanden. Es können auch mehrere solcher Zentraleinheiten unmittelbar mit dem Bussystem mit statischer Adressierung verbunden sein, ohne dass diese Zentraleinheiten unmittelbar untereinander verbunden sind und auch nicht in eine MOST-Ringtopologie eingebunden sind.

Eine besonders vorteilhafte Anwendung der Erfindung ist der Einsatz in einem elektronischen System, das grundsätzlich nach dem HAVi-Standard zur Anwendung in Fahrzeugen arbeitet. Dazu liegt unterhalb des Communication Media Manager (CMM) ein nach dem MOST-Verfahren arbeitendes Netzwerk, gegebenenfalls auch mit nach dem MOST-Verfahren arbeitenden Geräten. Dabei ist lediglich für die MOST-Zentraleinheit eine Erweiterung zur Übersetzung der dynamisch vergebenen Adressen in entsprechende quasi-statische Adressen erforderlich, wohingegen die weiteren MOST-Geräte lediglich dem MOST-Standard ohne die Notwendigkeit einer Erweiterung entsprechen.

Das erfindungsgemäße Verfahren erlaubt eine einheitliche Adressierung auf der Bus- und Geräteverwaltungsebene sowie für auf das System zugreifende Applikationen. Dies kann mittels eines Communication Media Managers (CMM) erfolgen, der speziell für die Anpassung für MOST ausgeprägt ist. Der CMM ist beispielsweise in einer Zentraleinheit, einer sogenannten Head-Unit, installiert, auf der Applikationen und Treiber (DCM) zur Steuerung eines MOST-Geräts, beispielsweise eines CD-Spielers, laufen.

Eine Kontrollnachricht an das MOST-Gerät wird von der Applikation an das entsprechende DCM gesendet. Dieses verarbeitet den entsprechenden Befehl und setzt ihn in einen MOST- konformen Befehlsaufruf um. Anschließend wird der CMM durch einen Funktionsaufruf angewiesen, diesen Befehlsaufruf MOSTgerecht zu verpacken, zu adressieren und auf den darunter liegenden MOST-Bus zu senden.

Dadurch wird eine einheitliche Schnittstelle für die Applikation erreicht und ein einheitlicher Funktionsaufruf für das CMM verwendet. Lediglich das DCM, bzw. die darin zusammengefassten FCMs und der CMM selbst müssen bei dem erfindungsgemäßen Verfahren MOST- konform arbeiten. Die anderen Komponenten (abgesehen vom Transport Adaption Module) sind bei einem MOST und einem IEEE-1394 basierten System jeweils identisch.

Zusätzlich zu der Übersetzung der Adressen kann es notwendig sein, eine Umsetzung der Steuerkommandos vorzunehmen.

Diese Umsetzung geschieht innerhalb des DCM in den gerätespezifischen FCM. Da diese FCM nur für ein bestimmtes Gerät entworfen sind, wissen diese, welche Fähigkeiten und Funktionen das zu steuernde Gerät besitzt. Insbesondere, ob in diesem Gerät ein (erweiterter) HAVi-Standard konformer Protokollstapel läuft.

Wenn dies der Fall ist, ist es sinnvoll keine zusätzliche Umsetzung von Steuerkommandos, die vom HAVi-System verwendet werden auf diejenigen Funktionsaufrufe zu machen, die MOST verwendet. Stattdessen wird das HAVi-Steuerkommando in ein MOST-Datenpaket verpackt, mit der entsprechenden MOST-Zieladresse versehen und als asynchrones MOST-Paket an das zu steuernde Gerät gesendet. In diesem Gerät erhält die dortige CMM / HAVi Instanz eine MOST-Function Block ID aus dem proprietären Bereich hexF0-hexFE. Diese Function Block ID wird verwendet, um ein gesendetes asynchrones Datenpaket der zuständigen CMM / TAM Instanz zuzuführen. Dort wird dieses Datenpaket dann ausgepackt und dem HAVi-Standard gemäß interpretiert.

Der entsprechende Befehl, mit dem der FCM das Messaging System anweist ein Kommando an ein Gerät zu senden, sieht dabei wie folgt aus:

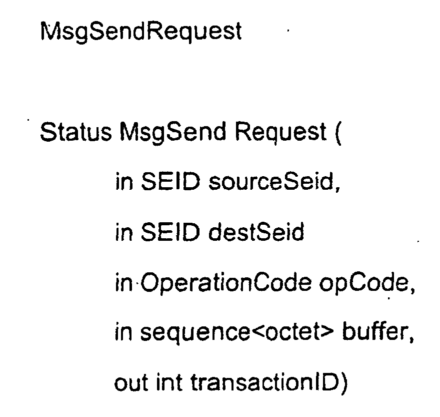

Dabei bezeichnet die sourceSeid die SEID des sendenden FCM, destSeid die SEID des Zielsoftwareelements, opCode den Befehl der auf dem Zielsoftwareelement ausgeführt werden soll, buffer enthält die Daten bzw. Kommandos, die übertragen werden sollen. Die transactionlD ist eine Kennung, die vom Messaging System zurück gegeben wird und den mit diesem Aufruf begonnenen Übertragungsvorgang identifiziert. Das Messaging System baut aufgrund dieses Aufrufs ein Datenpaket mit folgender Struktur zusammen:

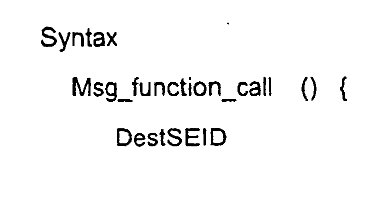

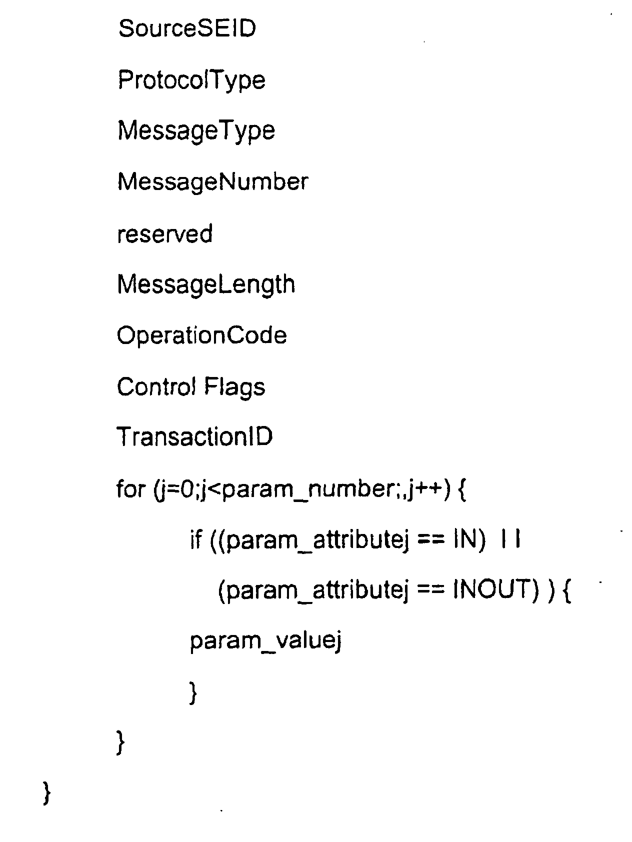

Dabei werden diejenigen Teile, die nicht mit dem Aufruf MsgSendRequest übergeben werden vom Messaging System gesetzt. Der TAM extrahiert dann aus der Ziel-SEID (destSeid) die Logical Node Address des MOST-Gerätes, an das das Paket gesendet werden soll und wird dann vom TAM in ein asynchrones MOST-Datenpaket verpackt und an das MOST-Gerät übertragen. Dort wird es entsprechend empfangen und an das dortige Messaging System als HAVikonforme Nachricht übergeben.

Wenn im Zielgerät kein HAVi konformer Protokollstapel läuft, wird das gerätespezifische FCM im steuernden Gerät einen MOST-konformen Funktionsaufruf generieren. Dieser wird dann innerhalb des TAM in ein MOSTkonformes Control Data Telegram umgesetzt und im Control Channel gesendet.

Ein MOST-Funktionsaufruf hat die allgemeine Form:
DeviceID.FblockID.InstID.FktID.OPType.Length(Data)

Dabei bedeuten:
- DevicelD: Device Identifier - auch logical node address. Ist eine temporäre Adresse eines Gerätes in einem MOST-Netzwerk. sie ergibt sich aus der relativen Position im Ring (POS) (Adresse:hex400+POS) und zusätzlich ggf. aus einer von der Applikation frei konfigurierbaren
- FblockID: Function Block Identifier ― Identifiziert eine bestimmte Funktion innerhalb eines Gerätes
- InstID: Instance Identifier ― bezeichnet eine bestimmte Instanz eines Function Blocks innerhalb eines Gerätes
- FktID: Function Identifier ― bezeichnet eine bestimmte Funktion, oder ein Funktionsmodul
- OPType: Operation Type - bezeichnet eine bestimmte Operation, die auf die zuvor bezeichnete Funktion ausgeführt wird
- Lenght: Länge des folgenden Datenfeldes (oder Parameterfeldes ) in Bytes
- Data: Datenfeld, oder Parameterfeld

Dieser Aufruf wird mit Hilfe des Befehls MsgSendReliable oder MsgSendSimple dem darunter liegendem TAM übergeben.

Die beiden Befehle haben folgende im HAVi-Standard beschreibende Syntax:
MsgSendSimple
Status MsgSendSimple (in ProtocolType protocol,
   in SEID sourceSEID
   in sequenze<SEID> destSEIDList,
   in sequence<octet> buffer)
MsgSendReliable
Status MsgSendReliable
   in ProtocolType protocol,
   in SEID sourceSeid,
   in sequence<SEID> destSeidList,
   in sequence<octet> buffer)

Dabei wird als Protokolltyp (protocol) eine Kennung für den MOST eingetragen (z. B. hex80), die Quellenadresse (sourceSEID) ist diejenige des aufrufenden FCM, die Zieladresse (destSeid, bzw. destSeidList) besteht aus der nach der oben beschriebenen Vorschrift zusammengesetzten GUID des MOST-Zielgerätes und einem beliebigen Software Handle (z. B. hexffff). Der gesamte MOST-Funktionsaufruf wird in den buffer verpackt. Vorteilhaft ist dabei den Funktionsaufruf inklusive der Device ID zu verpacken, da der TAM keinerlei Veränderungen an dem Aufruf vornehmen muss. Der TAM extrahiert dann den Inhalt von buffer und übertrag den Inhalt als Funktionsaufruf über den Control Channel des MOST Busses. Das Zielgerät erhält als reines MOST-Gerät ein Steuerpakte, dass entsprechend der MOSt-Spezifikation aussieht und wird daher MOST-konform reagieren.

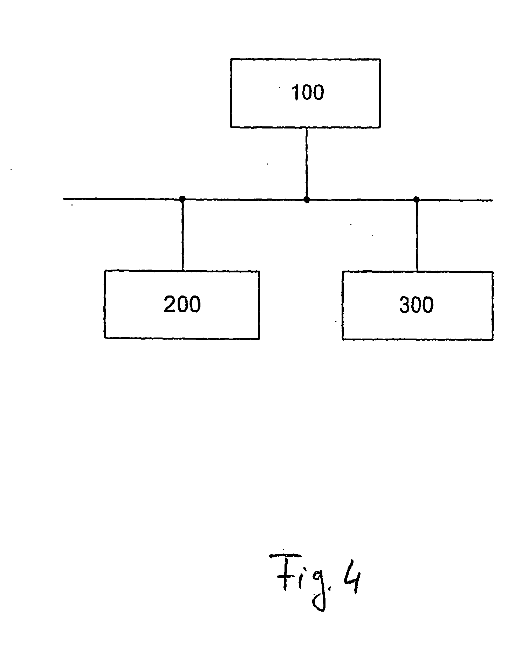

Mit Bezugnahme auf die Fig. 4 werden im Weiteren weitere bevorzugte Ausführungsformen der Erfindung beschrieben.

Gegeben ist ein Netzwerk nach dem erfindungsgemäßen Verfahren, das als Bustechnologie ein System nach dem MOST-Verfahren verwendet. Dabei ist ein zu steuerndes MOST-Gerät angeschlossen (z. B. ein CD-Spieler 200), ein zu steuerndes Gerät, das nach dem erweiterten HAVi-Standard arbeitet (z.B. ein Radio 300) und ein steuerndes Gerät mit einem Protokollstapel nach dem HAVi-Standard und einer Erweiterung nach dem erfindungsgemäßen Verfahren (Head-Unit 100).

### Beispiel 1:

Auf der Head-Unit läuft eine Applikation, die Kontrollfunktionen auf dem Gerät 200 ausführen will. Dabei bedient sie sich der Applikationsschnittstelle, die von dem für dieses Gerät spezifischen DCM bereitgestellt wird. Dieser Aufruf (z.B. ein ,Play' Kommando für den CD-Spieler) wird von dem DCM, bzw. dem darin enthaltenen, zuständigen FCM in einen entsprechenden MOST-Funktionsaufruf umgesetzt. Dieser Funktionsaufruf wird mit Hilfe des Befehls MsgSendReliable an den TAM übergeben. Der TAM erkennt des darin enthaltenen Protokolltyps (MOST=hex80), dass es sich dabei um einen MOST-Funktionsaufruf handelt. Daher wird der Inhalt des buffer extrahiert und als Funktionsaufruf über den Control Channel des MOST Bisses gesendet. Der CD-Spieler 200 erhält einen MOST-Funktionsaufruf und für den darin enthaltenen Befehl 'Play' aus.

### Beispiel 2:

Auf der Head-Unit läuft eine Applikation, die Kontrollfunktionen auf dem Gerät (200) ausführen will. Dabei bedient sie sich der Applikationsschnittstelle, die von dem für dieses Gerät spezifischen DCM bereitgestellt wird. Dieser Aufruf (z. B. eine Tune_Up für das Radio 300) wird von dem DCM, bzw. dem darin enthaltenen, zuständigen FCM in einen HAVi-konformen Funktionsaufruf umgesetzt und mit Hilfe des Befehls MsgSendRequest an das Messaging System übermittelt. Das Messaging System der Head-Unit 100 verpackt dieses Kommando dann in ein asynchrones MOST-Paket mit der aus der destSEID extrahierten Local Node Address. Auf der Gegenseite (Radio 300) wird das Paket empfangen und der Inhalt an das dortige Messaging System weitergleitet. Das darin enthaltene Kommando 'Tune_Up' wird dann ausgeführt.

Das beschreibende Verfahren lässt sich vorteilhaft auch zu Anbringung von Bluetooth und Ethernet Geräten einsetzen. Da diese beiden Standards eine zur GUID ähnlich aufgebaute - aber kürzere - Adresse verwenden, ist es möglich, den dort vorgesehenen gerätespezifischen Anteil der Adresse in den Bereich nach dem Busdiskriminator zu integrieren.

### Bezugszeichenliste

plattform-spezifische API 1
Interoperabilitäts-API 2
herstellerabhängige Plattform 3
Anwendung 4
havlet 5
System Manager 6
Event Manager 7
Registry 8
Resource Manager 9
DCM Manager 10
DCM 11
Messaging System 12
Communication Media Manager 13
Transport Adaption Module 14
Bussystem 20
Gerät 21
Gerät 22
Gerät 23
DCM 24
DCM 25
DCM 26
Bussystem 27
Gerät / Zentraleinheit 28
Gerät 29
Gerät 30
Gerät 31
Speicher 32
Speicher 33
Programm 34
quasi-statische Adresse 35
Kommander 36
Feld 37
Feld 38
Feld 39
Feld 40
Head-Unit 100
Gerät 200
Radio 300

## Patentansprüche

1. Elektronisches System mit
- einem ersten Bussystem (20) basierend auf statischen Adressen,
- einem zweiten Bussystem (27) mit bei einer Initialisierung dynamisch vergebenen Adressen,
**dadurch gekennzeichnet daß**
- dem zweiten Bussystem eine statische Adresse zugeordnet ist (32),
- und das System Mittels (28, 32) zur Transformation einer dynamischen Adresse in eine quasi-statische Adresse enthält, wobei die quasi-statische Adresse die dem zweiten Bussystem zugeordnete statische Adresse beinhaltet.

2. Elektronisches System nach Anspruch 1, bei dem die statischen Adressen weltweit eindeutig sind.

3. Elektronisches System nach Anspruch 2, bei dem jede statische Adresse eine Herstellerkennung und eine herstellerabhängige Kennung aufweist.

4. Elektronisches System nach Anspruch 1, 2 oder 3, bei dem das zweite Bussystem eine Ringtopologie aufweist.

5. Elektronisches System nach einem der vorhergehenden Ansprüche 1 bis 4, bei dem jede der dynamisch vergebenen Adressen entsprechend der Position des betreffenden Geräts in der Ringtopologie vergeben ist.

6. Elektronisches System nach einem der Ansprüche 4 oder 5, bei dem es sich bei jeder der dynamisch vergebenen Adressen um eine logische Knotenkennung handelt.

7. Elektronisches System nach einem der vorhergehenden Ansprüche mit einem Busdiskriminator (33) für das zweite Bussystem, wobei die quasi-statische Adresse auch den Busdiskriminator beinhaltet.

8. Elektronisches System nach Anspruch 7, bei dem die Länge des Busdiskriminators und der dynamisch vergebenen Adresse die Länge der herstellerabhängigen Kennung nicht überschreitet.

9. Elektronisches System nach einem der vorhergehenden Ansprüche 1 bis 8, bei dem die Mittel zur Transformation in einer Zentraleinheit (28) des zweiten Bussystems angeordnet sind.

10. Elektronisches System nach einem der vorhergehenden Ansprüche 1 bis 9 mit einer Interoperabilitätsarchitektur mit mindestens einem DCM (24, 25, 26) für eines der Geräte des elektronischen Systems.

11. Elektronisches System nach einem der vorhergehenden Ansprüche 1 bis 10, bei dem es sich bei dem zweiten Bussystem um einen MOST kompatibles Bussystem handelt.

12. Verfahren zum Adressieren für ein elektronisches System mit einem ersten Bussystem basierend auf statischen Adressen und mit einem zweiten Bussystem mit bei einer Initialisierung dynamisch vergebenen Adressen, mit folgenden Schritten:
- Empfang einer Nachricht mit einer dynamisch vergebenen Adresse,
- Transformation der dynamisch vergebenen Adresse in eine quasi-statische Adresse, wobei die quasi-statische Adresse eine dem zweiten Bussystem zugeordnete statische Adresse beinhaltet,
- Weiterleitung der Nachricht mit der quasi-statischen Adresse.

13. Verfahren nach Anspruch 12, bei dem die statischen Adressen weltweit eindeutig sind und vorzugsweise eine Herstellerkennung und eine herstellerabhängige Kennung aufweisen.

14. Verfahren nach Anspruch 12 oder 13, bei dem das zweite System eine Ringtopologie aufweist und dynamisch vergebenen Adressen entsprechend einer Position in der Ringtopologie vergeben werden.

15. Verfahren nach Anspruch 14, bei dem es sich bei einer dynamisch vergebenen Adresse um eine logische Knotenkennung handelt.

16. Verfahren nach einem der vorhergehenden Ansprüche 12 bis 15, bei dem die Transformation der dynamischen Adresse in eine quasi-statische Adresse unter der zusätzlichen Verwendung eines Busdiskriminators durchgeführt wird.

17. Verfahren nach einem der vorhergehenden Ansprüche 12 bis 16, bei dem die Länge des Busdiskriminators und der dem zweiten Bussystem zugeordneten statischen Adresse kleiner oder gleich der Länge der herstellerabhängigen Kennung ist.

18. Verfahren nach einem der vorhergehenden Ansprüche 12 bis 17, bei dem die weitergeleitete Nachricht von einer DCM einer Interoperabilitätsarchitektur empfangen wird und die DCM hierauf unter Verwendung der quasi-statischen Adresse antwortet.

19. Computerprogrammprodukt mit computerlesbaren Mitteln zur Durchführung eines Verfahrens nach einem der vorhergehenden Ansprüche 12 bis 18, wenn das Computerprogramm auf einem elektronischem System durchgeführt wird.

## Claims

1. Electronic system having
- a first bus system (20) based on static addresses,
- a second bus system (27) with addresses allocated dynamically during initialization,
**characterized in that**
- the second bus system has an associated static address (32),
- and the system contains means (28, 32) for transforming a dynamic address into a quasi-static address, the quasi-static address comprising the static address associated with the second bus system.

2. Electronic system according to Claim 1, in which the static addresses are unique worldwide.

3. Electronic system according to Claim 2, in which each static address has a manufacturer identifier and a manufacturer-dependent identifier.

4. Electronic system according to Claim 1, 2 or 3, in which the second bus system has a ring topology.

5. Electronic system according to one of the preceding Claims 1 to 4, in which each of the dynamically allocated addresses is allocated on the basis of the position of the device in question in the ring topology.

6. Electronic system according to either of Claims 4 and 5, in which each of the dynamically allocated addresses is a logical node identifier.

7. Electronic system according to one of the preceding claims with a bus discriminator (33) for the second bus system, where the quasi-static address also comprises the bus discriminator.

8. Electronic system according to Claim 7, in which the length of the bus discriminator and of the dynamically allocated address does not exceed the length of the manufacturer-dependent identifier.

9. Electronic system according to one of the preceding Claims 1 to 8, in which the means for transformation are arranged in a central unit (28) in the second bus system.

10. Electronic system according to one of the preceding Claims 1 to 9 with an interoperability architecture having at least one DCM (24, 25, 26) for one of the devices in the electronic system.

11. Electronic system according to one of the preceding Claims 1 to 10, in which the second bus system is a MOST-compatible bus system.

12. Method for addressing for an electronic system having a first bus system based on static addresses and having a second bus system with addresses allocated dynamically during initialization, having the following steps:
- a message having a dynamically allocated address is received,
- the dynamically allocated address is transformed into a quasi-static address, the quasi-static address comprising a static address associated with the second bus system,
- the message is forwarded using the quasi-static address.

13. Method according to Claim 12, in which the static addresses are unique worldwide and preferably have a manufacturer identifier and a manufacturer-dependent identifier.

14. Method according to Claim 12 or 13, in which the second system has a ring topology, and dynamically allocated addresses are allocated on the basis of a position in the ring topology.

15. Method according to Claim 14, in which a dynamically allocated address is a logical node identifier.

16. Method according to one of the preceding Claims 12 to 15, in which the dynamic address is transformed into a quasi-static address with the additional use of a bus discriminator.

17. Method according to one of the preceding Claims 12 to 16, in which the length of the bus discriminator and of the static address associated with the second bus system is less than or equal to the length of the manufacturer-dependent identifier.

18. Method according to one of the preceding Claims 12 to 17, in which the forwarded message is received by a DCM in an interoperability architecture, and the DCM responds to this using the quasi-static address.

19. Computer program product having computer-readable means for carrying out a method according to one of the preceding Claims 12 to 18 when the computer program is executed on an electronic system.

## Revendications

1. Système électronique doté
- d'un premier système de bus (20) se basant sur des adresses statiques,
- d'un second système de bus (27) avec des adresses remises dynamiquement en cas d'initialisation,
**caractérisé en ce qu'**
- une adresse statique (32) est associée au second système de bus et
- le système comprend des moyens (28, 32) pour transformer une adresse dynamique en une adresse quasi-statique, l'adresse quasi-statique comprenant l'adresse statique associée au second système de bus.

2. Système électronique selon la revendication 1,
dans lequel les adresses statiques sont univoques dans le monde entier.

3. Système électronique selon la revendication 2,
dans lequel chaque adresse statique comporte une identification du fabricant et une identification dépendant du fabricant.

4. Système électronique selon la revendication 1, 2 ou 3,
dans lequel le second système de bus comprend une topologie en anneau.

5. Système électronique selon l'une quelconque des revendications précédentes 1 à 4,
dans lequel chacune des adresses remises dynamiquement est remise suivant la position de l'appareil concerné dans la topologie en anneau.

6. Système électronique selon l'une quelconque des revendications 4 ou 5,
dans lequel il s'agit d'une identification logique de noeud dans le cas de chacune des adresses remises dynamiquement.

7. Système électronique selon l'une quelconque des revendications précédentes avec un discriminateur de bus (33) pour le second système de bus,
**caractérisé en ce que**
l'adresse quasi-statique comprend également le discriminateur de bus.

8. Système électronique selon la revendication 7,
dans lequel la longueur du discriminateur de bus et de l'adresse remise dynamiquement ne dépasse pas la longueur de l'identification dépendant du fabricant.

9. Système électronique selon l'une quelconque des revendications précédentes 1 à 8,
dans lequel les moyens de transformation sont disposés dans une unité centrale (28) du second système de bus.

10. Système électronique selon l'une quelconque des revendications précédentes 1 à 9,
**caractérisé par**
doté d'une architecture d'interopérabilité avec au moins un DCM (24, 25, 26) pour l'un des appareils du système électronique.

11. Système électronique selon l'une quelconque des revendications précédentes 1 à 10,
dans lequel il s'agit d'un système de bus compatible MOST dans le cas du second système de bus.

12. Procédé pour adresser un système électronique avec un premier système de bus se basant sur des adresses statiques et avec un second système de bus avec des adresses remises dynamiquement lors d'une initialisation avec les étapes suivantes consistant à :
- recevoir une information avec une adresse remise dynamiquement,
- transformer l'adresse remise dynamiquement en une adresse quasi-statique, l'adresse quasi-statique comprenant une adresse statique associée au second système de bus,
- transférer l'information avec l'adresse quasi-statique.

13. Procédé selon la revendication 12,
selon lequel les adresses statiques sont univoques dans le monde entier et comprennent de préférence une identification du fabricant et une identification dépendant du fabricant.

14. Procédé selon la revendication 12 ou 13,
selon lequel le second système comprend une topologie en anneau et dans lequel des adresses remises dynamiquement sont remises en fonction d'une position dans la topologie en anneau.

15. Procédé selon la revendication 14,
selon lequel il s'agit d'une identification logique de noeud dans le cas d'une adresse remise dynamiquement.

16. Procédé selon l'une quelconque des revendications précédentes 12 à 15,
selon lequel la transformation de l'adresse dynamique en une adresse quasi-statique est réalisée en utilisant en plus un discriminateur de bus.

17. Procédé selon l'une quelconque des revendications précédentes 12 à 16,
selon lequel la longueur du discriminateur de bus et de l'adresse statique associée au second système de bus est inférieure ou égale à la longueur de l'identification dépendant du fabricant.

18. Procédé selon l'une quelconque des revendications précédentes 12 à 17,
dans lequel l'information transmise est reçue par un DCM d'une architecture d'interopérabilité et dans lequel le DCM répond à cette information en utilisant l'adresse quasi-statique.

19. Produit d'un programme informatique doté de moyens informatiques permettant de réaliser un procédé selon l'une quelconque des revendications précédentes 12 à 18, lorsque le programme informatique est réalisé sur un système électronique.
